# EUROPEAN PATENT SPECIFICATION

(11) **EP 1 703 605 B1**
(45) Date of publication and mention of the grant of the patent: **22.05.2013**
(21) Application number: 06075545.1
(22) Date of filing: 08.03.2006
(51) Int. Cl.: H02G 3/12

(54) **Improved sunken module**
Verbessertes versenktes Modul
Module noyé amélioré

(30) Priority: 16.03.2005 BE 200500138
(43) Date of publication of application: 20.09.2006
(73) Proprietor: NIKO, N.V., 9100 Sint-Niklaas (BE)
(72) Inventor: Totte, Lieven, 9140 Elversele (BE)
(74) Representative: D'Halleweyn, Nele Veerle Trees Gertrudis

(56) References cited:
- DE-A- 2 621 719
- DE-A- 4 028 766
- DE-U- 29 805 172
- DE-U- 29 901 692

## Description

The present invention concerns a sunken module, more particularly a sunken module in the form of a power socket, switch or the like, sunk into the walls of homes or the like.

Such sunken modules are already known of the type that essentially consists of a base plate; a body; at least one claw which is hinge-mounted in relation to the body and/or the base plate; and tightening means for the claw in the form of a bolt provided through a passage in the plate and/or the body and through a passage in the claw and a nut working in conjunction with it.

Such a sunken module is usually mounted in an opening or in a hollow wall and fixed by tightening the above-mentioned bolt in the nut, as a result of which the claw is turned and pushed out to thus clamp the sunken module in the sunken box or behind the hollow wall.

Depending on the application in solid or hollow walls, or depending on the rules or habits in particular countries, it may be necessary to remove the claw or claws before taking the sunken module into use.

In that case, the sunken module is fixed in or against the wall by means of screws which are screwed through the base plate in the wall concerned.

A disadvantage of the known sunken modules is that, before mounting and remounting the claw or claws, the bolt and nut of the tightening means must be removed first, which is relatively time-consuming and which also entails a risk in that the bolts and/or nuts might get lost during this operation, so that even more time is lost in searching the missing part.

Another disadvantage is that when building in and/or extending the sunken module in a wall, the bolt must be unscrewed when tightening or loosening the claws, which again entails a risk in that the nut may come off the bolt and one will have to start looking for the loosened nut, or one will even have to dismount the sunken module or adjacent sunken module to be able to recover the nut.

From DE 298.05.172, sunken modules with claws are known, whereby each claw is provided, together with a tightening mechanism in the form of a bolt and nut, in a dismountable part of the body, such that each claw can be removed together with the tightening mechanism and the dismountable part of the body without having to loosen the bolt and nut.

A disadvantage of such known sunken modules is the complex construction of the sunken module and the dismountable part with claw and tightening mechanism, and the relatively large number of parts required therefore, what makes such a sunken module relatively expensive.

Another major disadvantage is that the dismountable part with claw and tightening mechanism is loose in relation to the body, as a result of which it loosens easily from the body while the sunken module is being mounted in a wall, which makes mounting the sunken module more difficult.

From DE 26 21 719 A, sunken modules with claws are known, whereby each claw is provided with a claw elongating part having an eye which is open at one side. By means of the at one side open eye the claw elongating part can be hung on the bolt without first removing the bolt and the nut. However, the claws itself can not be dismounted without removing the bolt and the nut.

A disadvantage of such sunken modules is the fact that, although the claw elongating part may be dismounted and mounted easily, still the claws can not be dismounted without removing the bolt and the nut in case it is necessary to remove the daws. Still the risk exists that the bolts and/or nuts might get lost during this operation.

Another major disadvantage is that the claw elongating parts are hung very loose on the bolt which results in an instable position of these claw elongating parts when mounting the sunken module in a sunken box or hollow wall.

Another disadvantage is that two parts require more material and therefore makes such sunken modules relatively expensive.

The present invention aims to remedy one or several of the above-mentioned and other disadvantages.

To this end, the invention concerns an improved sunken module of the above-mentioned type, whereby the form and dimensions of the claw and the body which accommodates the claw are such that only the claw can be dismounted and mounted again without having to remove the tightening means concerned.

An advantage of such an improved sunken module according to the invention is that when, depending on the application, the claw or claws need to be mounted or dismounted, this can be done without having to remove the tightening means, which entails a gain of time when building in or extending the sunken module.

Another advantage is that the nut can stay on the bolt all the time, such that means can be provided which prevent the nut from being removed from the bolt, for example by upsetting the free end of the threaded part of the bolt, such that a possible loss of the nut can be avoided at all times.

The claw is preferably mounted in a groove of the body of the plate and it is hinge-mounted in the groove by means of two protrusions provided on two opposite side walls and which can work in conjunction with two recesses in the opposite walls of the above-mentioned groove.

Thus, the claw can be easily loosened from the groove without having to dismount a hinge pin to that end.

According to a preferred embodiment, the claw is provided on at least one of the above-mentioned side walls with a thickening at a distance from the protrusion on the side wall concerned, whereby the claw with this thickening is clamped somewhat between the opposite walls of the groove, such that the claw retains its obtained position after each rotation and so that, consequently, no elastic is required to keep the claw in place, as is the case with the known sunken modules.

The claw is preferably made such that the above-mentioned passage for the bolt in the claw continues up to a free end or up to a free edge of the claw, for example as the passage is realised in a groove in a wall of the claw.

In this way, the claw can simply be pulled away sideways without the bolt preventing it.

In order to better explain the characteristics of the invention, the following preferred embodiment of an improved sunken module according to the invention is given as an example only without being limitative in any way, with reference to the accompanying drawings, in which:

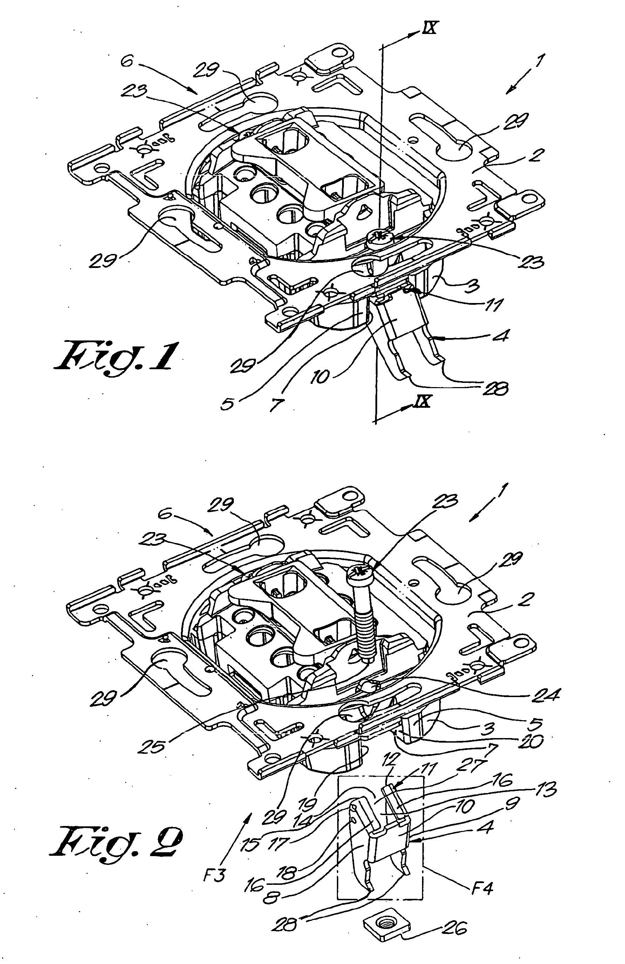

figure 1 schematically represents an improved sunken module according to the invention in perspective;
figure 2 represents the sunken module of figure 1, but with a claw which has been removed from the body;
figure 3 represents a view according to arrow F3 in figure 2;
figure 4 represents the part indicated by F4 in figure 2 to a larger scale;
figure 5 represents a view according to arrow F5 in figure 4;
figure 6 represents a section according to line VI-VI in figure 3 to a larger scale;
figure 7 represents a view according to arrow F7 in figure 6;
figure 8 represents a section according to line VIII-VIII in figure 5;
figure 9 represents a section according to line IX-IX in figure 1;
figure 10 represents a section as that of figure 9, but for another position;
figure 11 repressnts a variant of a sunken module according to figure 3.

The figures represent an improved sunken module 1 according to the invention in the form of an electric switch.

The sunken module 1 essentially consists of a base plate 2; a body 3 having smaller dimensions which is fixed against the base plate 2; and two claws 4 which are provided in a rotating manner on two opposite walls 5 and 6 of the body 3, which can rotate in particular in a groove 7 in each of these walls 5 and 6.

The claws 4 are in this case made of a more or less elastic plate material, for example steel.

Each claw 4 is formed of two parallel, or practically parallel opposite side walls 8 and 9 which are connected to each other by means of a bridge 10, whereby at a free end 11 is provided a cross wall 12 between the walls 8 and 9 and whereby in this cross wall 12 is provided a passage 13 in the form of a groove 14 which is parallel to the side walls 8 and 9 and which continues up to a free edge 15 of the cross wall 12.

The cross wall 12 is in this case formed of two edges 16 of the side walls 8 and 9, which edges are bent towards each other.

On the side walls 8 and 9, on either side of the claw 4 and near the cross wall 12 respectively, is provided a protrusion 17, whereby these protrusions 17 face each other crosswise.

The length of the protrusions 17 is such that the width A of the claw 4 at the location of the protrusions 17 is somewhat larger than the width B of the opening of the above-mentioned grooves 7.

At a certain distance from the above-mentioned protrusions 17 is provided a thickening 18 on one or on each of the above-mentioned side walls 8 and 9 whose thickness is in this case somewhat smaller than the length of the protrusions 17, and selected such that the width C of the claw 4 at the location of this thickening or thickenings 18 is somewhat larger than the above-mentioned width B of the grooves 7.

In each of the opposite walls 19 and 20 of the grooves 7 is provided a recess 21, whereby the recesses 21 in these walls 19 and 20 are situated opposite each other and whereby the claws 4 are hinge-mounted between these walls 19 and 20 by means of the above-mentioned protrusions 17 which can work in conjunction with the above-mentioned recesses 21 in a hinged manner.

At the height of the above-mentioned recesses 21, as of the walls 5 and 6 of the body 3, are provided excavations 22 in the above-mentioned walls 19 and 20 of the grooves 7, so as to form a widening which narrows at least locally in the direction of the above-mentioned recesses 21 and which thus so to say forms a conical guide for the protrusions 17 when introducing the claws 4 in the corresponding grooves 7.

The sunken module 1 is further provided with tightening means for each claw 4 which, in the given example, are formed of a bolt 23 which is provided through a passage 24 in the base plate 2 and/or in the body 3 and which also extends with its free end 25 through the above-mentioned passage 13 in the cross wall 12 of the claw 4 concerned, whereby a nut 26 is screwed on this free end 25 which is held in the space 27 confined by the walls 8, 9, 10 and 12 of said claw 4 in such a manner that it cannot turn.

The width of the slot 14 in the cross wall 12 of the claw 4 is larger than the diameter of the threaded part of the bolt 23 and is smaller than the width of the nut 26.

In order to mount the sunken module 1, the claws 4 are provided in the grooves 7, whereby each claw 4 is pushed with its side walls 8 and 9 between the walls 19 and 20 of the groove 7 concerned until the protrusions 17 snap in the recesses 21.

The widening of the groove 7 which is formed by the excavations 22 at the location of the recesses 21 thereby forms a guide whereby the protrusions 17 on side walls 8 and 9 are pushed towards each other thanks to the elasticity of these side walls 8 and 9 and whereby, when the protrusions 17 reach the location of the recesses 21, they snap into the recesses 21 as the side walls 8 and 9 spring back.

The protrusions 17 so to say form a hinge for the claws 4.

As the width C of the claw 4 at the thickenings 18 is larger than the width B of the grooves 7, the claw 4 will each time retain its position as it is turned thanks to the clamping of the claw 4 with its thickenings 18 between the walls 19 and 20 of the groove 7.

The use of a sunken module 1 according to the invention is very simple and as follows.

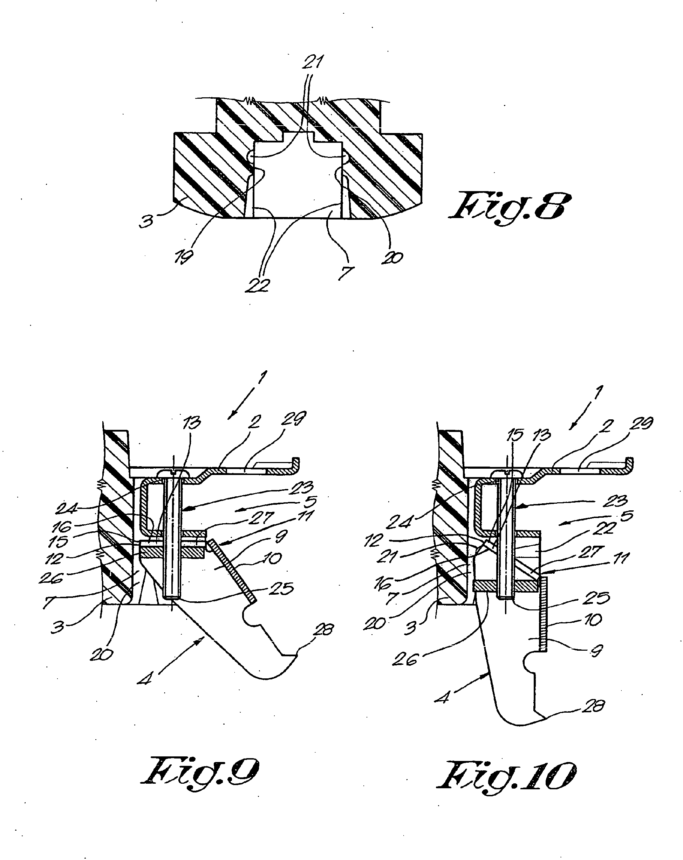

In order to mount the sunken module 1 in a sunken box or in an opening of a wall, the claws 4 are partly or entirely turned inward, for example into a position as represented in figure 10, whereby the cross wall 12 of the claw 4 is situated slantingly in relation to the axis of the bolt 23, after which the sunken module 1 is provided in the sunken box or in the opening with the base plate 2 up against the wall.

Next, the bolts 23 are tightened one after the other in the nuts 26 concerned, as a result of which the nut 26 moves in the axial direction of the bolt 23 and thus makes contact with the inner side of the cross wall 12, as a result of which, when the bolt 23 is tightened further, the free end 28 of the claw 4 hinges outward, as represented in figure 9, to thus clamp the sunken module 1 between the walls of the sunken box or the like.

As an alternative, the sunken module 1 can be provided in a wall and fixed against it by means of screws which are screwed down through passages 29 in the base plate 2, directly into the wall.

In this case, the claws 4 must be dismounted.

This can be done in a very simple manner by pulling the claws 4 crosswise to the walls 5 and 6 of the body 3 out of the grooves 7 concerned, whereby, thanks to the presence of the slot 14 in the cross wall 12, the bolt 23 does not hinder the removal of the claws 4.

Because of the elasticity of the claws 4, a certain tensile force will have to be exerted on the claws 4 in order to pull the protrusions 17 out of the recesses 21. A screwdriver or another tool can possibly be used to this end in order to lift the claw 4 out of the groove 7.

It is clear that the force which is necessary to remove the claws 4 can be adjusted by reducing the width A of the claws 4 at the location of the protrusions 17.

It is also clear that such a sunken module 1 can be commercialised, supplied with the claws 4 which then, depending on the necessity of the application, can be provided in the grooves 7 in reverse order compared to what has been described above, without any possible bolt 23 and nut 26 having to be removed.

If necessary, means can be provided which prevent the nut 26 from being removed from the bolt 23, for example by upsetting the free end 28 of the threaded part of the bolt 23 or by damaging the screw thread.

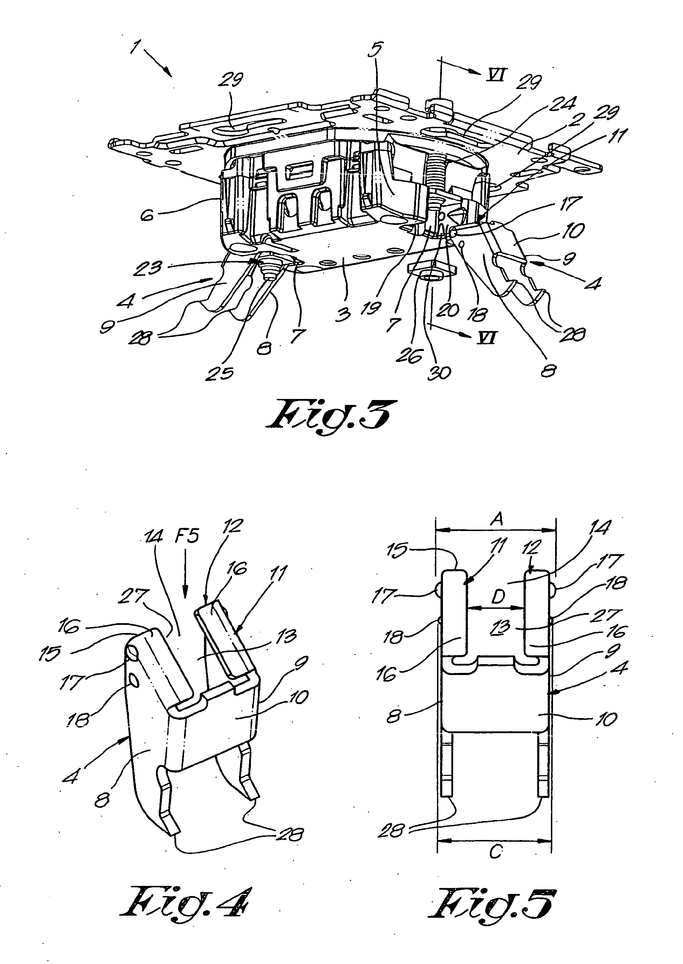

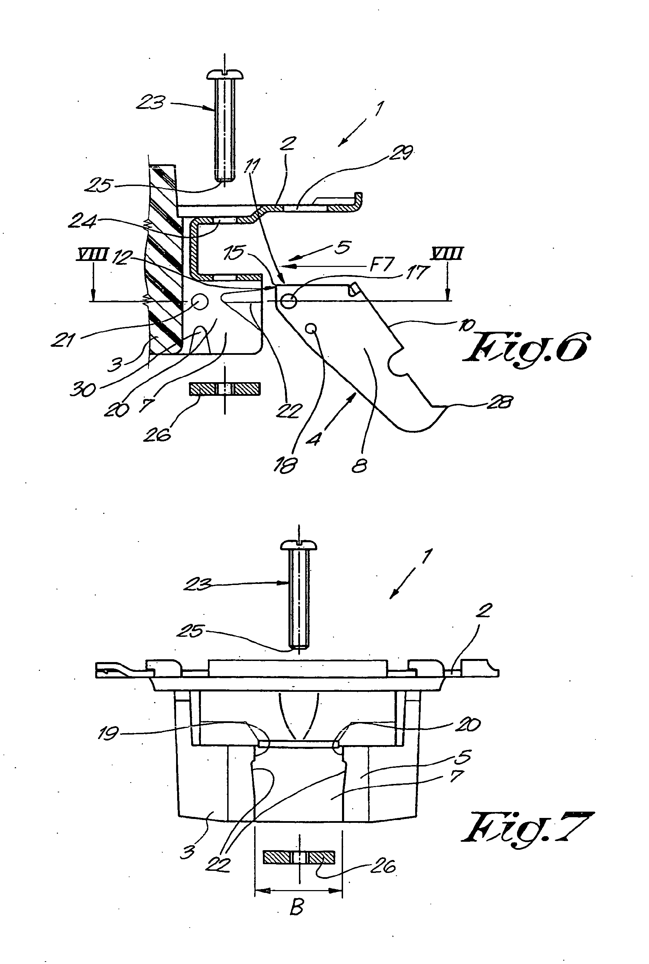

As is represented in figure 3 and in greater detail in figure 6, a sunken module 1 according to the invention can additionally be provided with a recess 30 in one or in both walls 19, 20 of the groove 7 in order to make the thickenings 18 snap in the recesses 30 when the claws 4 are turned completely inward, such that the claws 4 can be held somewhat in this inwardly turned position to simplify the mounting of the sunken module 1.

When these recesses 30 are moreover directed towards the openings 21, they can simplify the mounting of the claws 4 during the production of the sunken modules 1, when the bolts 23 have not been mounted yet, as the claws 4 can also be inserted in the groove 7 along the lower side of the sunken module 1 in that case.

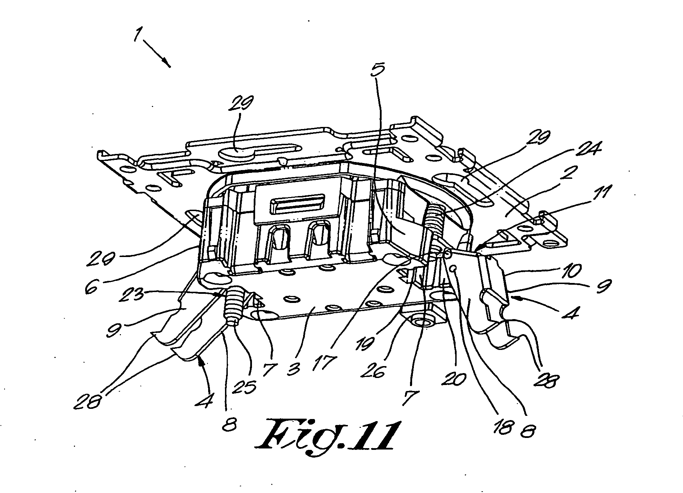

Figure 11 represents a variant of a sunken module 1 according to the invention, whereby the recesses 21 and 30 and the excavations 22 in the walls 19 and 20 of the grooves 7 have a different shape in this case.

The present invention is by no means restricted to the embodiment given as an example and represented in the accompanying drawings; on the contrary, such an improved sunken module according to the invention can be made in all sorts of shapes and dimensions while still remaining within the scope of the invention.

## Claims

1. Improved sunken module such as a power socket, switch or the like, essentially consisting of a base plate (2); a body (3); at least one claw (4) which is hinge-mounted in relation to the body (3) and/or the base plate (2); and tightening means for the claw (4) in the shape of a bolt (23) which is provided through a passage (24) in the base plate (2) and/or the body (3) and through a passage (13) in the claw (4) and a nut (26) working in conjunction with it; **characterised in that** said passage (13) for the bolt (23) in the claw (4) continues up to a free end or up to a free edge (15) of the claw (4) such that the claw (4) can be dismounted and mounted again without the bolt (23) preventing it.

2. Improved sunken module according to claim 1, **characterised in that** the claw (4) is mounted in a groove (7) of the body (3) or of the base plate (2) and **in that** the claw (4) is hinge-mounted in the groove (7) by means of two protrusions (17) which are provided on two opposite side walls (8, 9) of the claw (4) and which can work in conjunction with two recesses (21) in the opposite walls (19, 20) of the above-mentioned groove (7).

3. Improved sunken module according to claim 1 or 2, **characterised in that** the width (A) of the claw (4) at the location of the protrusions (17) is somewhat larger than the width (B) of the opening of the groove (7).

4. Improved sunken module according to any one of the preceding claims, **characterised in that** the claw (4) is made of an elastic plate material.

5. Improved sunken module according to claim 3,
**characterised in that** at the height of the above-mention recesses (21) are provided excavations (22) in the opposite walls (19, 20) of the groove (7) so as to form at least a local widening which narrows in the direction of the above-mentioned recesses (21).

6. Improved sunken module according to any one of claims 2 to 5, **characterised in that** the claw (4) is provided on at least one of the above-mentioned side walls (8, 9) with a thickening at a distance from the protrusion (17) on the side wall (8, 9) concerned.

7. Improved sunken module according to claim 6,
**characterised in that** the width (C) of the claw (4) at the height of the thickening (18) is somewhat larger than the width (B) of the opening of the groove (7).

8. Improved sunken module according to any of the preceding claims,
**characterised in that** the passage (13) is provided with a cross wall (12).

9. Improved sunken module according to claim 8, **characterised in that** the passage (13) is made as a slot (14) in the above-mentioned cross wall (12).

10. Improved sunken module according to claim 9, **characterised in that** the width (D) of the slot (14) is larger than the diameter of the threaded part of the bolt (23) and is smaller than the width of the nut (26).

11. Improved sunken module according to any one of the preceding claims, **characterised in that** the claw (4) is provided with a space (27) in which the nut (26) of the tightening means is provided such that it cannot turn.

12. Improved sunken module according to any one of the preceding claims, **characterised in that** means are provided which prevent the nut (26) from being removed from the bolt (23).

13. Improved sunken module according to claim 12,
**characterised in that** the above-mentioned means are formed by deforming the free end (28) of the threaded part of the bolt (23) by upsetting or damaging it.

## Patentansprüche

1. Verbessertes eingebettetes Modul, wie eine Steckdose, ein Schalter oder Ähnliches, welches im Wesentlichen aus einer Grundplatte (2); einem Sockel (3); mindestens einer Klaue (4), die in der Sockel (3) und/oder die Grundplatte (2) eingebaut ist und damit ein Scharnier bildet; und Anziehmitteln für die Klaue (4) in der Form einer Schraube (23), die durch eine Öffnung (24) in der Grundplatte (2) und/oder die Sockel (3) und durch eine Öffnung (13) in der Klaue (4) und eine passende Mutter (26) die in Verbindung mit die Schraube funktioniert; **dadurch gekennzeichnet, dass** diese Öffnung (13) für die Schraube (23) in der Klaue (4) bis zu einem freien Ende oder einer freien Rand (15) der Klaue (4) führt, sodass die Klaue (4) ein- und ausgebaut werden kann, ohne dass die Schraube (23) dass verhindert.

2. Verbessertes eingebettetes Modul nach Anspruch 1, **dadurch gekennzeichnet, dass** die Klaue (4) in eine Rille (7) des Sockel (3) oder der Grundplatte (2) eingebaut ist und dass die Klaue (4) in diese Rille (7) mittels zweier Vorsprungen (17) eingebaut ist und damit ein Scharnier bildet, welche Vorsprungen (17) sich an den beiden gegenüberliegenden Seitenwände (8, 9) der Klaue (4) befinden und die in Verbindung mit zwei Vertiefungen (21) in den gegenüberliegenden Wänden (19, 20) der oben genannten Rille (7) funktionieren.

3. Verbessertes eingebettetes Modul nach Anspruch 1 oder 2, **dadurch gekennzeichnet, dass** die Breite (A) der Klaue (4) an der Position der Vorsprungen (17) etwas größer ist als die Breite (B) der Öffnung der Rille (7).

4. Verbessertes eingebettetes Modul nach einem der vorstehenden Ansprüche, **dadurch gekennzeichnet, dass** die Klaue (4) aus einem elastischen Plattenmaterial hergestellt ist.

5. Verbessertes eingebettetes Modul nach Anspruch 3, **dadurch gekennzeichnet, dass** an der Position der oben genannten Vertiefungen (21) Hohlräume (22) in den gegenüber liegenden Wänden (19, 20) der Rille (7) angebracht wurden, sodass zumindest eine lokale Verbreiterung gebildet wird, die sich zu den oben genannten Vertiefungen (21) hin verkleinert.

6. Verbessertes eingebettetes Modul nach einem der vorstehenden Ansprüche 2 bis 5, **dadurch gekennzeichnet, dass** die Klaue (4) an mindestens einer der oben genannten Seitenwände (8, 9) eine Verdickung in einem Abstand von dem Vorsprung (17) an den entsprechenden Seitenwänden (8, 9) aufweist.

7. Verbessertes eingebettetes Modul nach Anspruch 6, **dadurch gekennzeichnet, dass** die Breite (C) der Klaue (4) an der Position der Verdickung (18) etwas größer als die Breite (B) der Öffnung der Rille (7) ist.

8. Verbessertes eingebettetes Modul nach einem der vorstehenden Ansprüche, **dadurch gekennzeichnet, dass** die Öffnung (13) mit einer Querwand (12) versehen ist.

9. Verbessertes eingebettetes Modul nach Anspruch 8, **dadurch gekennzeichnet, dass** die Öffnung (13) als Schlitz (14) in der oben genannten Querwand (12) angebracht ist.

10. Verbessertes eingebettetes Modul nach Anspruch 9, **dadurch gekennzeichnet, dass** die Breite (D) der Schlitz (14) größer ist als der Durchmesser des Gewindeteils der Schraube (23) und kleiner als die Breite der Mutter (26) ist.

11. Verbessertes eingebettetes Modul nach einem der vorstehenden Ansprüche, **dadurch gekennzeichnet, dass** die Klaue (4) mit einem Raum (27) ausgestattet ist, in dem die Mutter (26) der Anziehmittel so angebracht wird, dass keine Drehung möglich ist.

12. Verbessertes eingebettetes Modul nach einem der vorstehenden Ansprüche, **dadurch gekennzeichnet, dass** Mitteln bereitgestellt werden, die verhindern, dass die Mutter (26) von der Schraube (23) entfernt werden kann.

13. Verbessertes eingebettetes Modul nach Anspruch 12, **dadurch gekennzeichnet, dass** die oben genannten Mitteln angebracht werden, indem das freie Ende (28) des Gewindeteils der Schraube (23) deformiert oder beschädigt wird.

## Revendications

1. Module encastré amélioré tel qu'une prise de courant, un interrupteur ou un dispositif similaire, essentiellement composé d'une plaque de base (2) ; d'une embase (3) ; au moins d'une griffe (4) montée sur l'embase (3) et/ou sur la plaque de base (2) de manière à former une charnière ; et d'un dispositif de serrage pour la griffe (4) sous la forme d'un boulon (23) s'insérant dans un passage (24) de la plaque de base (2) et/ou de l'embase (3) ainsi que dans un passage (13) de la griffe (4), et un écrou (26) fonctionnant conjointement avec le boulon (23); **caractérisé en ce que** ledit passage (13) destiné au boulon (23) dans la griffe (4) se prolonge jusqu'à une extrémité libre ou un bord libre (15) de la griffe (4) de manière à ce que la griffe (4) puisse être démontée et remontée sans que le boulon (23) l'en empêche.

2. Module encastré amélioré selon la revendication 1, **caractérisé en ce que** la griffe (4) est montée dans un sillon (7) de l'embase (3) ou de la plaque de base (2) et **en ce que** la griffe (4) est montée dans le sillon (7) de manière à former une charnière au moyen de deux saillies (17) présentes sur deux parois latérales et opposés (8,9) de la griffe (4) et fonctionnant conjointement avec deux renfoncements (21) présents dans les parois opposés (19,20) du sillon (7) susmentionné.

3. Module encastré amélioré selon les revendications 1 et 2, **caractérisé en ce que** la largeur (A) de la griffe (4) à l'emplacement des saillies (17) est légèrement plus grande que la largeur (B) du sillon (7).

4. Module encastré amélioré selon l'une des revendications précédentes, **caractérisé en ce que** la griffe (4) est fabriquée d'un matériau en plaque élastique.

5. Module encastré amélioré selon la revendication 3, **caractérisé en ce qu'**à hauteur des renfoncements susmentionnés (21), des cavités (22) sont pratiquées dans les parois opposés (19, 20) du sillon (7) de manière à former au moins un élargissement local qui se rétrécit en direction des renfoncements (21) susmentionnés.

6. Module encastré amélioré selon l'une des revendications 2 à 5, **caractérisée en ce que** la griffe (4) est munie sur au moins l'un des parois latérales (8,9) susmentionnés d'un épaississement à distance de la saillie (17) de la paroi latérale (8,9) concerné.

7. Module encastré amélioré selon la revendication 6, **caractérisé en ce que** la largeur (C) de la griffe (4) à l'emplacement de l'épaississement (18) est légèrement plus grande que la largeur (B) du sillon (7).

8. Module encastré amélioré selon l'une des revendications précédentes, **caractérisé en ce que** le passage (13) est doté d'un bord transversal (12).

9. Module encastré amélioré selon la revendication 8, **caractérisé en ce que** le passage (13) forme une fente (14) dans le bord transversal (12) susmentionné.

10. Module encastré amélioré selon la revendication 9, **caractérisé en ce que** la largeur (D) de la fente (14) est supérieure au diamètre de la section filetée du boulon (23) et inférieure à la largeur de l'écrou (26).

11. Module encastré amélioré selon l'une des revendications précédentes, **caractérisé en ce que** la griffe (4) est munie d'un espace (27) dans lequel l'écrou (26) du dispositif de serrage est inséré de manière à ce qu'il ne puisse tourner.

12. Module encastré amélioré selon l'une des revendications précédentes, **caractérisé en ce que** des moyens sont mis en oeuvre pour empêcher l'écrou (26) d'être retiré du boulon (23).

13. Module encastré amélioré selon la revendication 12, **caractérisé en ce que** les moyens susmentionnés sont formés par déformation de l'extrémité libre (28) de la section filetée du boulon (23) par l'écraser ou l'endommager.
